# EUROPEAN PATENT APPLICATION

(11) **EP 0 913 080 A2**
(43) Date of publication of application: **06.05.1999**
(21) Application number: 98120351.6
(22) Date of filing: 28.10.1998
(51) Int. Cl.: A01G 3/08

(54) **Vehicle for supporting operating devices for pruning and/or other treatments of plants**

(30) Priority: 29.10.1997 IT BO970149 U
(71) Applicant: Campagnola S.R.L., 40069 Zola Predosa (IT)
(72) Inventor: Ferretti, Vittorio Pio, 40050 Monte S. Pietro (BO) (IT)
(74) Representative: Dall'Olio, Giancarlo

(57) **Abstract**

A vehicle (100) for supporting operating devices for pruning and/or other treatments of plants arranged in rows, includes a frame (10) supported by at least two co-axial fore wheels (18,19) and at least one rear steering wheel (41,42). The rear steering wheel (41,42) is inclined by a predetermined angle (α) with respect to a vertical longitudinal plane of symmetry of the frame, and makes the vehicle (100) follow a curved trajectory. The frame (10) supports propulsion means and, in its central part, a collapsible structure (50) carrying devices for pruning and/or performing other treatments of the plants. A feeler bar (20), hinged to a side of the frame (10), strikes the plants relative to one row thus being moved to operate control means (30) acting on steering means for the rear wheel, so as to change the vehicle (100) trajectory.

## Description

The present invention relates to a vehicle for supporting operating devices for pruning and/or other treatments of plants arranged in rows.

It is known that new technical solutions are needed in agricultural field, which make various procedures related to pruning and other treatments of different types of cultivation, easier, more practical and quicker.

The object of the present invention is to propose a vehicle for supporting operating devices for pruning and/or other treatments of plants, which meets the above mentioned need.

This object is obtained in agreement with the contents of claim 1. Other features of the invention are set forth in the sub-claims.

The characteristic features of the present invention are pointed out in the following, with particular reference to the enclosed drawings, in which:

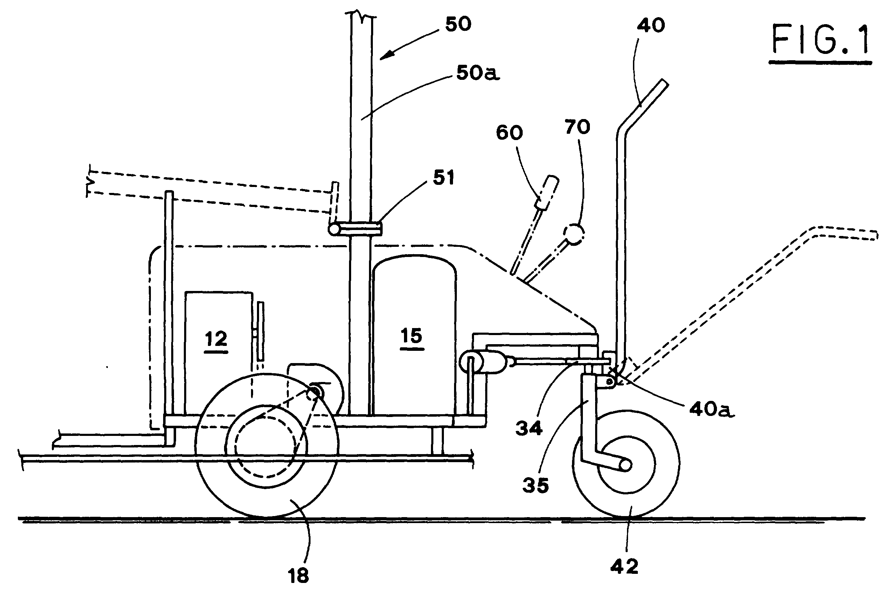

- Figure 1 is a lateral schematic view of the subject vehicle;
- Figure 2 is a plan view of this vehicle;

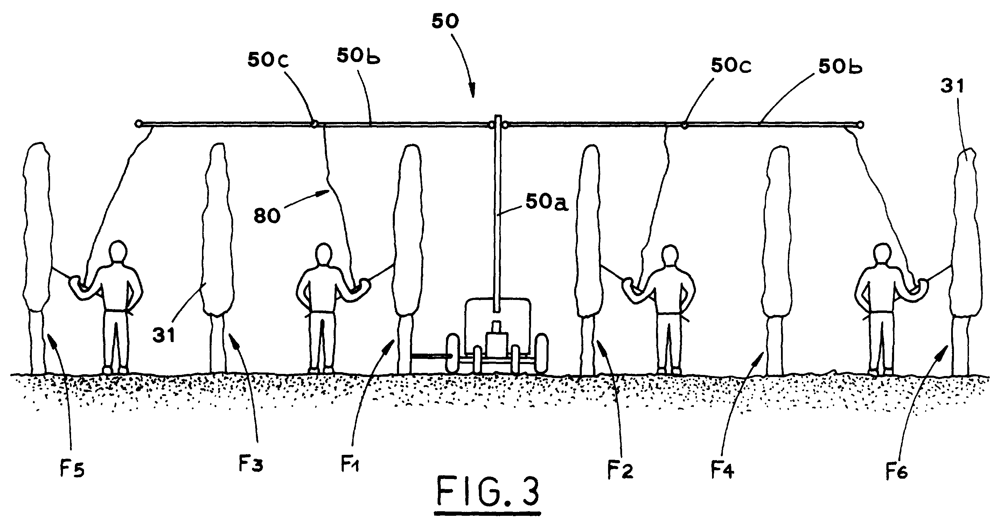

- Figure 3 shows, according to a front view, a possible use of this vehicle;
- Figures 4a and 4b show, according to plan views, different working steps of the subject vehicle.

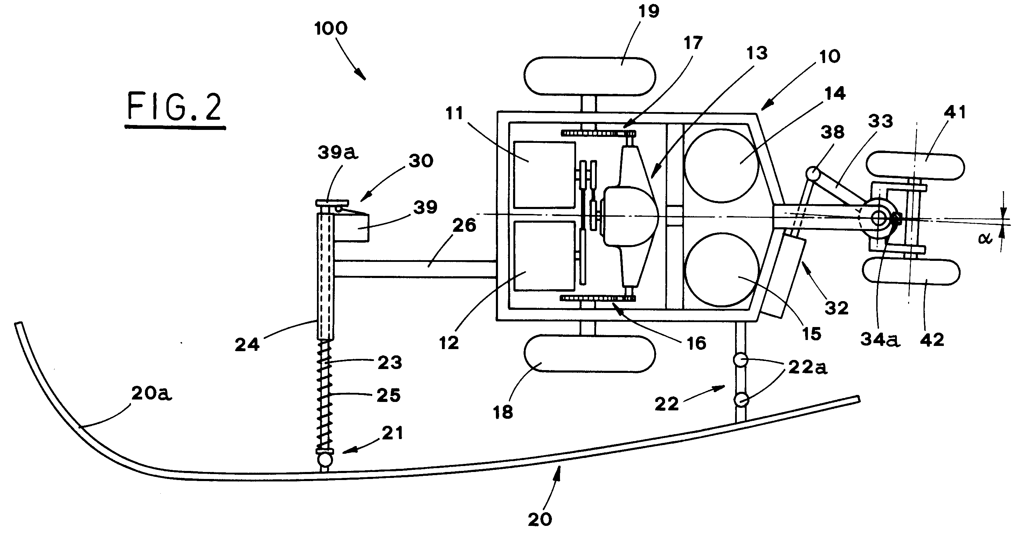

With reference to Figure 2, the vehicle indicated with 100, includes a frame 10 supported by two fore wheels 18, 19 and e.g. two rear steering wheels 41, 42.

Advantageously, only one rear wheel can be provided.

The frame 10 supports a motor 11, e.g. an i.c. engine, a hydrostatic driving group 13, and, in its central part, a collapsible structure 50.

The motor 11 operates a compressor 12, which produces compressed air stored in two reservoirs 14, 15, situated on this frame 10.

The reservoirs 14 and 15 feeds pneumatic devices 80, as will be explained later.

The hydrostatic driving group 13 is operated by the motor 11 and is connected to the fore wheels 18, 19 by e.g. chain drives 16, 17.

The driving group 13 operates the fore driving wheels 18, 19, with a very reduced gear ratio, so as to move the vehicle and allow operators standing therebeside, to prune or perform other treatments to the plants 31.

The collapsible structure 50 includes an upright 50a, whose upper part supports rods 50b, stiffened by suitable tie rods, that are not shown.

The rods 50b are arranged symmetrical and transversal to the upright 50a and have hinges 50c at their midpoints, which allow to reduce the rods dimension, when the vehicle 100 is not used.

The rods 50b support devices 80 for pruning and/or performing other treatments for the plants 31.

At a determined height, the upright 50a features an hinge connection 51, so that its dimensions can be reduced when the vehicle 100 is not operative.

The rear driving wheels 41, 42, articulated to the frame 10, are elastically kept oriented at a certain angle α with respect to a longitudinal symmetrical plane of the frame, so that the vehicle 100 follows a curved trajectory, extending toward a predetermined row F1 of a series of adjacent rows F1, F2, F3, F4, F5, F6, among which the vehicle 100 operates.

A feeler bar 20 is articulated by means of first and second hinge means, fore 21 and rear 22 respectively, to one side of the frame 10, and is subjected to elastic means which push it outwards.

The feeler bar 20 faces the centre of the curved trajectory followed by the frame 10 while moving.

The feeler bar 20, lying on a horizontal plane, has a fore part 20a, protruding beyond the front of the frame 10 and curved toward the vertical plane of symmetry of the frame 10.

The first hinge means 21 is fastened to a shaft 23 that is almost perpendicular thereto and slides in a relative sleeve 24 fastened to an arm 26 fixed to the front of the frame 10.

Elastic means 25, e.g. a spring, act on the shaft 23, so as to keep the feeler bar 20 in the outmost position with respect to the frame 10.

The second hinge means 22 include a double joint 22a which allows movements of the feeler bar 20 in relation to the shaft 23.

Control means 30 for detecting the initial sliding of the shaft 23 inside the sleeve 24, include a plate 39a, situated at the end of the shaft 23, and a micro-switch 39, situated on the side of the sleeve 24.

These control means 30 are operated by the feeler bar 20, and consequently, they act on steering means acting on the rear wheels 41, 42.

These steering means of the rear wheels 41, 42 include a pneumatic jack 32, supported by the rear part of the frame 10.

The jack 32 acts, by a hinge 38, on a lever 33 fastened to a disc 34.

The disc 34 can be set in engagement with a fork 35 for the rear wheels 41, 42, by connecting means.

These connecting means include a block 40a hinged to the fork 35 and subjected to elastic means, that are not shown, which keep the block 40a inserted in an indentation 34a made in the disc 34. A handle 40 is fastened to the block 40a.

Operation of the device 100 will be described in the following.

The vehicle 100 is situated at the beginning of two adjacent rows F, F2, in which pruning and/or other treatments are to be performed.

The handle 40 is swung upwards until the block 40a in introduced into the indentation 34a, so that the rear steering wheels 41, 42 becomes turned by a predetermined angle α.

The motor 11 is then operated to set the driving wheels 18 into rotation, 19, thus imposing to the whole vehicle 100 the above mentioned curved trajectory.

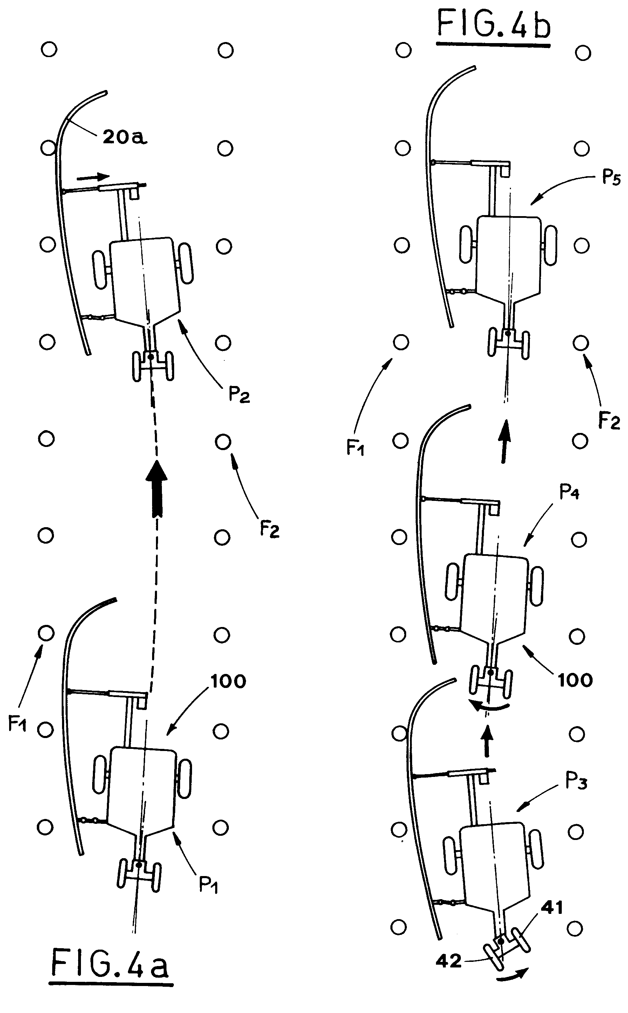

The vehicle 100 moves on along the curved trajectory (position P1 of Figure 4a), until the feeler bar 20 inevitably strikes a plant 31 of the nearest row F1 (position P2 of Figure 4a), which causes the shaft 23 sliding inside the sleeve 24.

The sliding shaft operates the control means 30, which in turn, operate the jack 32.

The jack 32, by acting on the lever 33, makes the rear wheels 41, 42 take suddenly a second configuration (position P3 of Figure 4b) in which they assume a position inclined by a predetermined angle, in a direction opposite to the initial position thus

This steering action changes the trajectory of the vehicle 100, moving it away of the nearest row (see positions P4 and P5 of Figure 4b).

Then, the rear wheels gradually return to their first position due to the jack 32 being gradually returned to its initial position by known techniques.

When the vehicle 100 has reached the end of the row, the block 40a is disengaged from the indentation 34a, by acting on the handle 40, thus allowing manual steering of the steering wheels. The vehicle 100 can be placed at the beginning of another row, so as to continue pruning and/or other treatments of the plants.

The vehicle 100 is also equipped with manually operated levers 60, 70, a brake and an accelerator for changing the vehicle speed.

The motor 11 can be electric or hydraulic; consequently the devices 80 will be operated electrically or hydraulically.

It is understood that the micro-switch 39 with the relative plate 39a can be replaced with a sensor of another type.

The proposed vehicle for supporting operating devices for pruning and/or performing other treatments of plants arranged in rows can operate between two adjacent rows or adjacent to one row maintaining a direction substantially parallel to one row, so as to allow the operators to prune and/or perform other treatments simultaneously in more rows and in a parallel way, thus reducing the time required for such operations.

## Claims

1. Vehicle for supporting operating devices for pruning and/or performing other treatments of plants arranged in rows, the vehicle being designed to work adjacent to one of said rows, and characterised in that it includes:
a frame (10) supported by at least two co-axial fore wheels (18,19) and at least one rear steering wheel (41,42), with said rear steering wheel being kept in a first configuration, in which it is inclined by a predetermined angle (α) with respect to a vertical longitudinal plane of symmetry of said frame, thus making said vehicle follow a curved trajectory extending toward said adjacent row of plants;
propulsion means for said frame (10), which include a motor (11) operating a hydrostatic driving group (13) connected to said fore wheels (18,19);
a collapsible structure (50) fastened to a central part of said frame (10) for supporting devices for pruning and/or performing other treatments of the plants;
a feeler bar (20), hinged to a side of said frame (10), so as to remain inside said curved trajectory, with said feeler bar (20) featuring a fore part (20a) protruding beyond the front of said frame (10) and curved toward said vertical longitudinal plane of symmetry, said feeler bar (20) being provided for striking the plants of said row during movement of the vehicle and for operating control means (30) acting on steering means of said rear steering wheel, so as to make said rear steering wheel steer suddenly and assume a second position, inclined by a predetermined angle, in a direction opposite to said first position, so as to change the vehicle trajectory and moving it away from said adjacent row;
said control means (30) acting on said steering means after the feeler bar has disengaged from a plant for gradually return said rear steering wheel to said first configuration.

2. Vehicle, according to claim 1, characterised in that said motor (11) operates a compressor (12) for producing compressed air, that is stored in two reservoirs (14,15), situated on said frame (10) for feeding said pneumatic devices.

3. Vehicle, according to claim 1, characterised in that said feeler bar (20) is articulated to the frame (10) by first and second hinge means, fore (21) and rear (22) respectively, said first hinge means (21) being fastened to a shaft (23) sliding in a relative sleeve (24) fastened to the front of the frame (10), with elastic means (25) acting on said shaft (23), so as to keep the feeler bar (20) in an outmost position with respect to the frame (10), and with said second hinge means (22) including a double joint (22a) which allows movements of the feeler bar (20) in relation to the shaft (23).

4. Vehicle, according to claim 1, characterised in that said control means (30) for detecting at least the initial sliding of the shaft (23) inside the sleeve (24), include a plate (39a), situated at the end of the shaft (23), and a micro-switch (39), situated on one side of the sleeve (24.

5. Vehicle, according to claim 1, characterised in that said means for steering the rear wheel include an actuator (32), supported by the frame (10) and acting, by a hinge (38), on a lever (33) fastened to a disc (34), said disc (34) being connectable, by connecting means, to a fork (35), supported by said rear wheel (41,42).

6. Vehicle, according to claim 5, characterised in that said connecting means include a block (40a) hinged to the fork (35) and subjected to elastic means which keep the block (40a) inserted in an indentation (34a) made in the disc (34) when said connecting means are in the working configuration, with a handle (40) fastened to said block (40a) and aimed at disengaging said block (40a) from said indentation (34a) thus allowing manual steering of said rear wheel (41,42) when said connecting means are in inoperative configuration.

7. Vehicle, according to claim 1, characterised in that said collapsible structure (50) includes an upright (50a), whose upper part supports rods (50b) and which, at a determined height, has a hinge (51); said rods (50b) featuring hinges (50c) at their midpoints, which allow to reduce the rods dimensions when the vehicle (100) is not operative.

8. Vehicle, according to claim 1, characterised in that it includes manually operated levers (60,70) acting on a brake and an accelerator respectively, for changing the vehicle speed.

9. Vehicle, according to claim 1, characterised in that said driving group (13) operates the fore wheels (18,19) with a reduced gear ratio, so as to allow operators standing beside the vehicle to prune or perform other treatments for the plants (31).
